# EUROPEAN PATENT APPLICATION

(11) **EP 4 579 888 A1**
(43) Date of publication of application: **02.07.2025**
(21) Application number: 24197422.9
(22) Date of filing: 29.08.2024
(51) Int. Cl.: H01M 50/103, H01M 50/15, H01M 50/169

(54) **SECONDARY BATTERY INCLUDING CAP PLATE WITH IMPROVED SEALING ABILITY**

(30) Priority: 27.12.2023 KR 20230192638
(71) Applicant: SK On Co., Ltd., Seoul 03161 (KR)
(72) Inventor: HEO, Won Tae, 34124 Daejeon (KR); PARK, Soo Min, 34124 Daejeon (KR); PAIK, Hyung Ju, 34124 Daejeon (KR); JEON, Hae Ryong, 34124 Daejeon (KR); CHEONG, Hoemin, 34124 Daejeon (KR); LEE, Yoon Sun, 34124 Daejeon (KR)
(74) Representative: Stolmár & Partner Patentanwälte PartG mbB

(57) **Abstract**

A secondary battery is disclosed. The secondary battery includes an electrode assembly, a case including an opening for insertion of the electrode assembly, and a cap plate including a bonding area welded to the case and closing the opening. The bonding area may include one or more support surfaces in contact with and supported by the case; and one or more chambers formed with a portion of the bonding area spaced apart from the case by the support surface.

## Description

### BACKGROUND

### 1. FIELD

The present disclosure relates to a secondary battery including a cap plate with improved sealing ability.

### 2. DESCRIPTION OF RELATED ART

A secondary battery is a means of energy storage that can be charged and discharged. A secondary battery is widely used in various means using electricity as a power source. For example, a secondary battery is used as a means of energy storage in various devices ranging from small devices such as mobile phones, laptops, and tablets to large devices such as vehicles and aircraft. In particular, in recent years, the use of secondary battery as a vehicle power source has been actively sought.

A secondary battery may be classified into a lead acid battery, a nickel cadmium battery, a nickel hydrogen battery, a lithium ion battery, or the like, depending on the material of electrodes. The secondary battery for each type may be appropriately selected depending on capacitance design, usage environment, and the like. A lithium-ion battery may achieve relatively high voltage and capacitance, as compared to other types of secondary batteries. Accordingly, a lithium-ion battery is widely used in a field requiring a means of high-density energy storage, such as a battery pack for a vehicle, or the like.

### SUMMARY

The secondary battery, such as a lithium-ion battery, or the like mainly includes a cathode material, an anode material, a separator, and an electrolyte. The cathode and anode materials are disposed with a separator formed of an insulating material interposed therebetween, and charging or discharging may be performed due to the movement of ions through the electrolyte.

An electrode assembly including a cathode material, an anode material, a separator, and the like, may be accommodated inside a case. In some types of secondary batteries, the case may have a roughly rectangular parallelepiped shape. In this case, an opening for insertion of the electrode assembly may be formed at an upper end of the case, and the opening may be closed by a cap plate. The cap plate may usually be coupled to the case by welding an edge portion thereof in contact with the case. Various welding bonding methods between the cap plate and the case have been proposed in the past. For example, a technology was proposed to improve sealing performance by forming a chamfer at an edge of the contact area between the cap plate and the can (case).

The above description is provided to help understand the technical background of the present disclosure, and should not be construed as reducing, limiting, or restricting the technical idea of the present disclosure. In addition, the contents described or suggested in the above description do not necessarily refer to prior art, and some may include contents that do not fall under prior art.

According to an embodiment of the present disclosure, a secondary battery for improving a coupling structure between a cap plate and a case may be provided.

According to an embodiment of the present disclosure, a secondary battery for preventing damage to an insulating coating layer due to welding heat may be provided.

According to an embodiment of the present disclosure, a secondary battery that can more effectively maintain a sealing structure between a cap plate and a case during swelling may be provided.

However, the technical problems to be achieved by the embodiments of the present disclosure are not necessarily limited to the technical objects mentioned above. Other technical problems not mentioned can be clearly understood by those skilled in the art from the detailed description and other descriptions in the specification.

The secondary battery of the present disclosure may be widely applied in green technology fields such as electric vehicles, battery charging stations, and solar power generation and wind power generation using other batteries. In addition, the secondary battery of the present disclosure may be used in eco-friendly electric vehicles, hybrid vehicles, and the like, to ameliorate the effects of climate change by suppressing air pollution and greenhouse gas emissions.

According to an aspect of the present disclosure, a secondary battery may include an electrode assembly, a case including an opening for insertion of the electrode assembly, and a cap plate including a bonding area welded to the case, and closing the opening. The bonding area may include one or more support surfaces in contact with and supported by the case, and one or more chambers formed with a portion of the bonding area spaced apart from the case by the support surface.

According to an embodiment, the chamber may be disposed to be connected to a weld bead formation part for bonding to the case, and may be formed to accommodate by-products generated during welding.

According to an embodiment, the chamber may include a plurality of chambers, wherein the plurality of chambers may be disposed to be spaced apart from each other with the support surface interposed therebetween, and at least one chamber, among the plurality of chambers may be disposed to be connected to a weld bead formation part for bonding to the case.

According to an embodiment, the case may include an insulating coating layer on an inner surface of the case, the cap plate may include a weld bead bonded to the case, and the support surface and the chamber may be disposed between the weld bead and the insulating coating layer.

According to an embodiment, the support surface may include a plurality of support surfaces, the chamber may include a plurality of chambers, and the plurality of support surfaces and the plurality of chambers may be alternately and repeatedly disposed along the bonding area.

According to an embodiment, the support surface may include a plurality of support surfaces, wherein the plurality of support surfaces may function to maintain at least one support surface, among the plurality of support surfaces in contact with the inner surface of the case when the case is deformed.

According to an embodiment, the bonding area may include a first extension rib formed to extend upwardly from an edge portion of the cap plate, wherein at least a portion of the first extension rib is disposed to be spaced apart from the inner surface of the case by the support surface, and a second extension rib formed to extend laterally from the first extension rib, to form a weld bead for bonding to the case.

According to an embodiment, the first extension rib may include one or more support ribs formed to extend toward the inner surface of the case, wherein an end of the first extension rib is in contact with and supported by the inner surface of the case to form the support surface.

According to an embodiment, the support rib may include a plurality of support ribs, wherein the plurality of support ribs may be disposed to be spaced apart by a predetermined interval along the first extension rib, to form the chamber between a pair of adjacent support ribs.

According to an embodiment, the cap plate may include a chamfer formed on a lower edge portion corresponding to the bonding area to guide the bonding to the case.

According to an embodiment, the bonding area may include a first extension rib formed to extend upwardly from an edge portion of the cap plate. The first extension rib may extend toward an inner surface of the case, forming repetitive curves inwardly and outwardly thereof, and according to the curves, a portion of the first extension rib may contact the inner surface of the case to form the support surface and another portion thereof may be spaced apart from the inner surface of the case to form the chamber.

According to an embodiment, the case may include a flange extending in a lateral direction from an upper end of the case toward the outside of the case and bonded to the cap plate. The bonding area may form a plane corresponding to the cap plate and be formed to extend in the lateral direction.

According to an embodiment, the chamber may be formed in a form of a groove formed to be concave on a bottom surface of the bonding area, wherein the plurality of chambers may be disposed to be spaced apart in the lateral direction along the bonding area, and at least one chamber, among the plurality of chambers, may be disposed to be connected to a weld bead formation part for bonding to the case.

According to an embodiment, the support surface and the chamber may be disposed between an insulating coating layer formed on an inner surface of the case and a weld bead for bonding the cap plate and the case, and may be formed to limit welding heat transfer to the insulating coating layer.

### BRIEF DESCRIPTION OF DRAWINGS

Certain aspects, features, and advantages of the present disclosure are illustrated by the following detailed description with reference to the accompanying drawings.
FIG. 1A is a schematic perspective view of a secondary battery according to an embodiment.
FIG. 1B is a schematic exploded perspective view of the secondary battery shown in FIG. 1A.
FIG. 1C is a schematic internal cross-sectional view of the secondary battery shown in FIG. 1A.
FIG. 2A is a schematic perspective view of a cap plate and a case according to an embodiment.
FIG. 2B is a schematic partial cross-sectional view of the cap plate and case shown in FIG. 2A.
FIG. 2C is a diagram illustrating an operating state of the cap plate and case shown in FIG. 2A.
FIG. 3A is a schematic perspective view of a cap plate and a case according to another embodiment.
FIG. 3B is a schematic partial cross-sectional view of the cap plate and case shown in FIG. 3A.
FIG. 4A is a schematic perspective view of a cap plate and a case according to another embodiment.
FIG. 4B is a schematic partial cross-sectional view of the cap plate and case shown in FIG. 4A.
FIG. 5A is a schematic perspective view of a cap plate and a case according to another embodiment.
FIG. 5B is a schematic partial cross-sectional view of the cap plate and case shown in FIG. 5A.

### DETAILED DESCRIPTION

Features of the present disclosure disclosed in this patent document are described by example embodiments with reference to the accompanying drawings. For convenience, in the following description, the technical gist of the present disclosure will be unclear or detailed descriptions of known configurations will be omitted.

The following examples are provided to more completely explain the present disclosure to those skilled in the art. The following embodiments are provided to aid in an understanding of the present disclosure, and the technical idea of the present disclosure is not necessarily limited to the specific embodiments described below. The present disclosure should be understood to broadly include various types of equivalents, substitutes, conversions, and the like, that implement the technical ideas described in the following embodiments.

Terms used in the following embodiments are provided to more completely describe specific embodiments from the above viewpoint. Accordingly, the terms used in the following embodiments should not be construed to reduce, limit, or limit the technical idea of the present disclosure.

In the following description, singular expressions may be interpreted to include plurality unless clearly excluded from the context. In addition, the expression "including" in the following description means that the components, parts, operations, features, steps, numbers, and the like, described in the description exist, which does not mean excluding the addition of one or more other components, parts, operations, features, steps, numbers, and the like.

In the following description, terms such as "first" and "second" may be used to distinguish specific components from other components. However, the above terms are used for the purpose of distinguishing specific components from other components for clarity of explanation, and the technical ideas of each component should not be interpreted as limited by the above terms.

A secondary battery described in this specification may include a battery that can be charged and discharged. For example, a secondary battery may include a lead acid battery, a nickel cadmium battery, a nickel hydrogen battery, a lithium ion battery, and the like. In this explanation, it is mainly taken that the secondary battery is a lithium ion battery. In general, the lithium-ion battery can have advantages such as lightweightedness, high energy density, low self-discharge rate, and the like. However, it should be understood that the technical concepts described in this specification are applicable to other suitable types of batteries other than lithium ion batteries.

The secondary battery disclosed in the present specification may include a single physical unit or a group unit in which a plurality of the above units are combined. For example, the secondary battery may include a battery cell, a battery module, a battery pack, and the like, according to classification standards commonly used in the vehicle field. In this description, it is mainly assumed and described that the secondary battery is a battery cell as a single unit. Generally, a battery cell is the basic unit of a battery pack including a cathode, an anode, a separator, an electrolyte, and the like. However, it should be understood that the technical concept described in this specification can be applied to other suitable types of group units, such as battery modules and battery packs, as needed.

The secondary battery disclosed in the present specification may include various packaging types. For example, the secondary battery may be packaged as a cylindrical, a prismatic, a pouch-type secondary battery, or the like, according to classification standards commonly used in the related art. In this disclosure, it is mainly assumed and described that the secondary battery is packaged in a square shape. Prismatic packaging, which is referred to as a prismatic battery, or the like, may generally have advantages in terms of durability, safety, and convenience of mounting. However, it should be understood that the technical concept described in this specification can be applied to other suitable packaging types, such as cylindrical and pouch types, as needed.

The secondary battery disclosed in the present specification may be used in various means requiring electrical energy. For example, the secondary battery may be suitably used in vehicle fields using electrical energy as a main power source or an auxiliary power source. As another example, secondary batteries may be suitably used in the field of aircraft such as a personal aircraft, an unmanned aerial vehicle, and drones, in the field of electronic devices such as mobile phones, laptops, and tablets, and in the field of electric tools such as electric drills, electric grinders, and electric hammers. However, it should be understood that the secondary battery described in this specification may be widely used in various means which operate based on electrical energy in addition to the above-described secondary batteries.

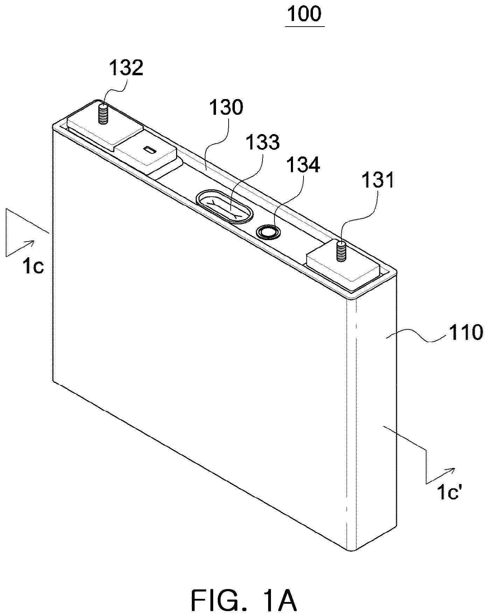

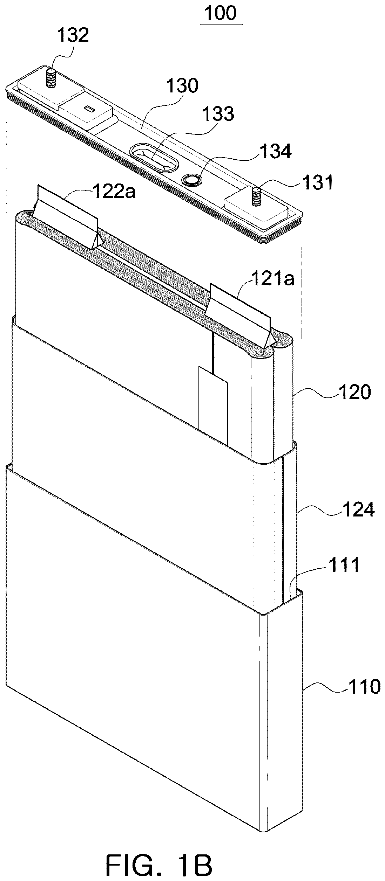

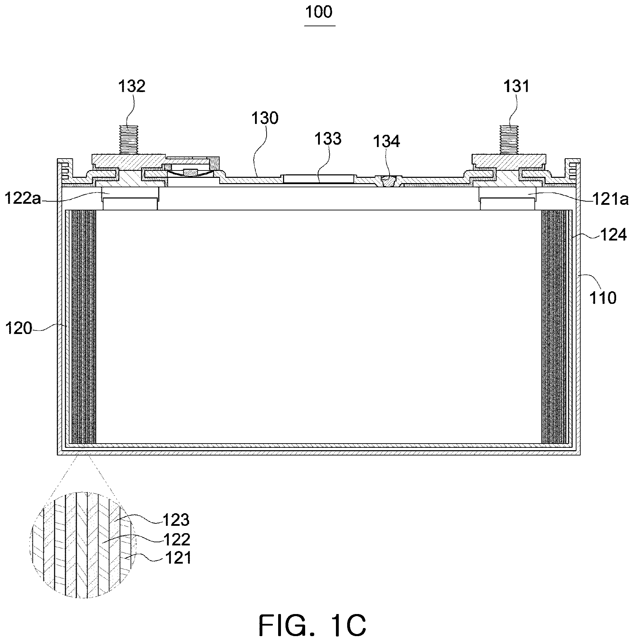

FIG. 1A is a schematic perspective view of a secondary battery according to an embodiment. FIG. 1B is a schematic exploded perspective view of the secondary battery shown in FIG. 1A. FIG. 1C is a schematic internal cross-sectional view of the secondary battery shown in FIG. 1A. For example, FIG. 1C is a cross-sectional view taken along line 1c-1c' in FIG. 1A.

For convenience of explanation, in the present embodiment, a battery cell packaged in a square shape is illustrated.

Referring to FIGS. 1A to 1C, a secondary battery 100 according to the present embodiment may include a case 110.

The case 110 may provide an internal space in which an electrode assembly 120, or the like may be accommodated. In the present embodiment, the case 110 is illustrated as having a substantially rectangular parallelepiped shape.

The case 110 may include an opening 111 connected to the internal space. In the present embodiment, the opening 111 is illustrated as being provided at an upper end of the case 110. However, the position of the opening 111 may be changed as needed and is not necessarily limited to the example. The opening 111 may function as a path for insertion of the electrode assembly 120, or the like. In addition, the opening 111 may function as a connection space for electrical connection between the electrode assembly 120 and an electrode terminal. The opening 111 may be properly closed by a cap plate 130, which will be described later.

A material of the case 110 may be appropriately selected in consideration of thermal and electrical conductivity, rigidity corresponding to swelling of the electrode assembly 120, processability, manufacturing costs, and the like. For example, the case 110 may be formed of a metal material including aluminum or aluminum alloy.

Meanwhile, the secondary battery 100 according to the present embodiment may include an electrode assembly 120.

The electrode assembly 120 may be disposed in the internal space of the case 110. If necessary, the electrode assembly 120 may be accommodated in an insulating bag 124 and disposed inside the case 110.

The electrode assembly 120 may include a cathode 121. The cathode 121 may include a cathode current collector and a cathode active material. In some embodiments, the cathode current collector may include aluminum, an aluminum alloy, and the like, and the cathode active material may include lithium cobalt oxide, lithium manganate, lithium nickelate, lithium iron phosphate, and the like. The cathode active material may be coated on a surface of the cathode current collector. Some areas of the cathode current collector, not coated with the cathode active material, may function as a cathode tab 121a. In some embodiments, a plurality of cathode tabs 121a may be provided, and a portion or all of the plurality of cathode tabs 121a may be bonded to each other.

The electrode assembly 120 may include an anode 122. The anode 122 may include an anode current collector and an anode active material. In some embodiments, the anode current collector may include copper, copper alloy, nickel, nickel alloy, and the like, and the anode active material may include carbon, silicon, and the like. The anode active material may be coated on a surface of the anode current collector. Some areas of the anode current collector, not coated with the anode active material may function as an anode tab 122a. In some embodiments, a plurality of anode tabs 122a may be provided, and a portion or all of the plurality of anode tabs 122a may be bonded to each other.

The electrode assembly 120 may include a separator 123. The separator 123 may be disposed between the cathode 121 and the anode 122. The separator 123 may function to limit physical contact between the cathode 121 and the anode 122 and provide a path for the movement of ions. In some embodiments, the separator 123 may be formed of a polymer material including polyethylene, polypropylene, and the like. In addition, the separator 123 may include dry and wet separators. In some embodiments, the separator 123 may include a coating layer including a ceramic coating layer.

The electrode assembly 120 may be formed by disposing the above-described components by winding, stacking, and the like. For example, the electrode assembly 120 may be formed in a structure in which the cathode 121, the anode 122, and the separator 123 are wound around an axis in a longitudinal or lateral direction. Alternatively, the electrode assembly 120 may be formed in a structure in which the above-described winding structure is compressed in a direction approximately perpendicular to the winding axis. The winding structure may be referred to as a `jelly roll' or the like in the art.

As another example, the electrode assembly 120 may be formed in a structure in which the cathode 121, the anode 122, and the separator 123 are sequentially stacked vertically (e.g., in a thickness direction or height direction of the electrode assembly) . In some cases, in the stacked structure, the separator 123 may be formed in a structure in which a plurality of unit separators 123, which are continuous in a longitudinal direction are sequentially folded and stacked according to the stacking of the cathode 121 and the anode 122. The stacked structure may be referred to as `stack and folding,' `z-folding,' and the like, in the art. However, in the present embodiment, the arrangement of each component of the electrode assembly 120 is not particularly limited. The electrode assembly 120 may have various dispositions other than those illustrated above.

In some embodiments, the electrode assembly 120 may be a combination of a plurality of units. For example, the electrode assembly 120 may include a unit wound in a jelly roll manner, and two or more of the units may be combined to form the electrode assembly 120. In the present embodiment, the electrode assembly 120 is a combination of two jelly roll units. As another example, the electrode assembly 120 may include units wound in a stack- and-folding manner, and two or more of the units may be combined to form the electrode assembly 120.

The electrode assembly 120 may be accommodated in the internal space of the case 110 together with an electrolyte. In some embodiments, the electrolyte may be formed of an organic solvent containing a lithium salt.

In some other embodiments, the electrolyte may be omitted or substituted. For example, when an inorganic solid electrolyte is used, the liquid or gel electrolyte solution may be omitted.

Meanwhile, the secondary battery 100 according to the present embodiment may include a cap plate 130.

The cap plate 130 may be formed to close an opening 111. In the present embodiment, the cap plate 130 is illustrated as having a square plate shape corresponding to the opening 111. The cap plate 130 may be coupled to the case 110 to seal the internal space of the case 110 in which the electrode assembly 120 is disposed. In some embodiments, the cap plate 130 may be welded and bonded to the case 110, such as ultrasonic welding, laser welding, or the like.

A cathode terminal 131 and an anode terminal 132 may be disposed on the cap plate 130. The cathode terminal 131 may be electrically connected to the cathode tab 121a of the electrode assembly 120, and the anode terminal 132 may be electrically connected to the anode tab 122a of the electrode assembly 120.

The cap plate 130 may include a vent 133. In the present embodiment, the vent 133 is disposed between the cathode terminal 131 and the anode terminal 132. However, the position of the vent 133 may be changed in various manners as needed, and is not necessarily limited to the example. In some other embodiments, the vent 133 may be disposed or added to the case 110. The vent 133 may be formed to open in response to an internal pressure of the case 110. The vent 133 may function to contribute to stabilization of the internal elements of the case 110 by discharging the internal pressure externally of the case 110. The vent 133 may include a notch of a predetermined shape. The notch may be formed to partially open the internal space of the case 110 by causing fracture according to the internal pressure.

The cap plate 130 may include an electrolyte inlet 134. The electrolyte inlet 134 may be used to inject an electrolyte into the internal space of the case 110. In the present embodiment, the electrolyte inlet 134 is disposed adjacent to the vent 133 in a central area of the cap plate 130. However, the position of the electrolyte inlet 134 may be changed in various manners, and is not necessarily limited to the examples.

The structure of the electrode assembly 120 shown in this disclosure is exemplary. In the present disclosure, the electrode assembly 120 including a cathode tab 121a and an anode tab 122a arranged side by side from one side of the electrode assembly 120 is illustrated, but the position and/or number of the cathode tab 121a and the anode tab 122a are exemplary. For example, in an embodiment not shown, the cathode tab 121a and the anode tab 122a may be located with the electrode assembly 120 (e.g., the cathode material 121, the anode material 122, and the separator 123) interposed therebetween. At least a portion of the cathode tab 121a and the anode tab 122a may be disposed between the case 110 and the electrode assembly 120, respectively.

In the present disclosure, a secondary battery 100 including a case 110 including an opening 111 and a cap plate 130 located on one side of the case 110 is illustrated, but this is exemplary. For example, in an embodiment not shown, a secondary battery 100 including a plurality of cap plates 130 located on both sides of the case 110 may be provided. At least one of the plurality of cap plates 130 may include a bonding area described below.

The secondary battery 100 according to embodiments of the present disclosure may include a bonding structure between the cap plate 130 and the case 110 as a technical feature. Accordingly, the bonding structure between the cap plate 130 and the case 110 will be explained in more detail below. For convenience, hereinafter, the cap plate and the case according to each embodiment will be given new reference numerals and explained.

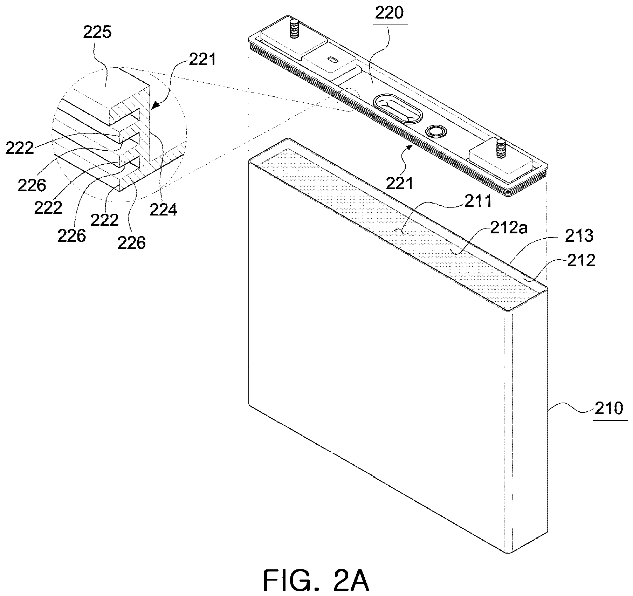

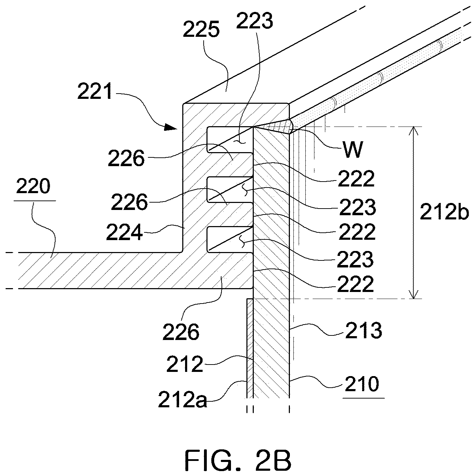

FIG. 2A is a schematic perspective view of a cap plate and a case according to an embodiment. FIG. 2B is a schematic partial cross-sectional view of the cap plate and case shown in FIG. 2A.

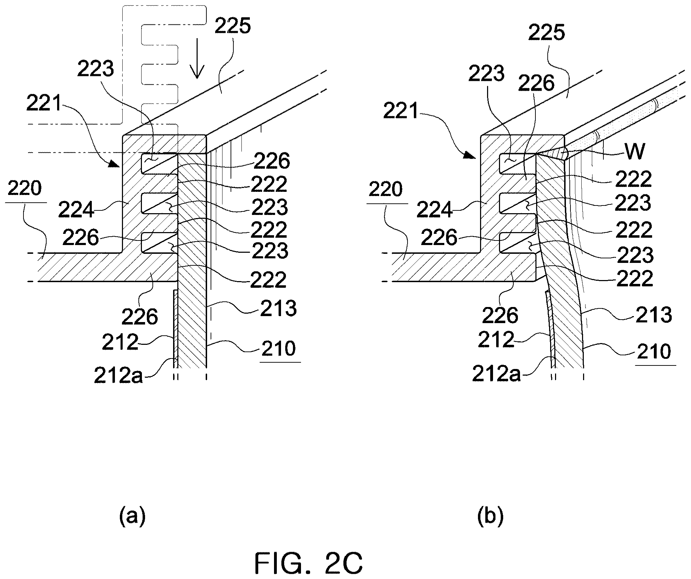

Referring to FIGS. 2A and 2B, the case 210 of the present embodiment may have a substantially rectangular parallelepiped shape, and an opening 211 may be formed at an upper end of the case 210. The opening 211 may provide a path for insertion of an electrode assembly (e.g., the electrode assembly 120 in FIG. 1C) . The opening 211 can be properly closed using a cap plate 220, which will be described later. At least a portion of the description of the case 110 and cap plate 130 in FIGS. 1A, 1B, and/or 1C may be applied to a case 210 and a cap plate 220 in FIGS. 2A, 2B, and/or 2C.

The case 210 may include an inner surface 212 and an outer surface 213. The inner surface 212 may be disposed toward the inside of the case 210, and the outer surface 213 may be disposed toward the outside of the case 210 to correspond thereto. The case 210 may have a predetermined thickness between the inner surface 212 and the outer surface 213.

An insulating coating layer 212a may be provided on the inner surface 212 of the case 210. The insulating coating layer 212a may be formed in a predetermined area of the inner surface 212. In the present embodiment, the insulating coating layer 212a may be properly omitted from a portion of an upper end 212b of the inner surface 212. That is, the insulating coating layer 212a may be appropriately omitted in the portion of the upper end 212b including a coupling portion of a cap plate 220, which will be described later. This may function to prevent damage to the insulating coating layer 212a due to physical contact with the cap plate 220, welding heat, and the like.

Meanwhile, the cap plate 220 of the present embodiment may be fastened to the upper end of the case 210 to close the opening 211. The cap plate 220 may be formed in a plate shape with predetermined left-right and front-back lengths to properly close the opening 211. In the present embodiment, the cap plate 220 may be coupled to the case 210 by having an edge portion welded to the upper end of the case 210. That is, the cap plate 220 may be welded and bonded to the case 210.

The cap plate 220 may include a bonding area 221 welded to the case 210. In the present embodiment, the bonding area 221 extends along an edge portion of the cap plate 220. However, the location and range of the bonding area 221 may be modified in various manners as needed, and are not necessarily limited to the examples. For example, in some embodiments, the bonding area 221 may be formed to extend limitedly along a portion of the edge of the cap plate 220, and bonding of the remaining portion through other alternative means may be considered.

In the present embodiment, the bonding area 221 may include one or more support surfaces 222. The support surface 222 may in contact with and supported by the inner surface 212 of the case 210, whereby at least a portion of the bonding area 221 may be spaced apart from the inner surface 212 of the case 210 by a predetermined interval. That is, the bonding area 221 may form a chamber 223 to be described later between the inner surface 212 of the case 210 and the bonding area 221.

In some embodiments, a support surface 222 may be formed in plural, and the plurality of support surfaces 222 may be disposed to be spaced apart by a predetermined interval along the inner surface 212 of the case 210. In the present embodiment, three support surfaces 222 are illustrated, and the three support surfaces 222 are disposed to be spaced apart vertically along the inner surface 212 of the case 210. However, the number, disposition, and the like, of the support surfaces 222 may be modified as needed and are not necessarily limited to the examples. For example, in some embodiments, the number of support surfaces 222 may be 2 to 5, and the 2 to 5 support surfaces 222 may be disposed to be spaced apart in a horizontal or an inclined direction.

Meanwhile, the bonding area 221 may include one or more chambers 223. The chamber 223 may be disposed between a pair of adjacent support surfaces 222. That is, the chamber 223 may be formed between a pair of support surfaces 222, disposed to be spaced apart from each other. The chamber 223 may be formed such that an edge portion of the cap plate 220 is spaced apart from the inner surface 212 of the case 210 by a predetermined interval.

In some embodiments, a plurality of chambers 223 may be formed, and the plurality of chambers 223 may be disposed to be spaced apart by a predetermined interval along the inner surface 212 of the case 210. In the present embodiment, three chambers 223 are formed to correspond to the support surface 222, and the three chambers 223 are disposed to be spaced apart vertically along the inner surface 212 of the case 210. However, similarly to the support surface 222, the number, disposition, and the like, of the chambers 223 may be modified as needed, and are not necessarily limited to the examples.

Meanwhile, the chamber 223 or one or more chambers 223 among the plurality of chambers 223 may be disposed to be connected to a bonding line to which the cap plate 220 and the case 210 are bonded. That is, the chamber 223 or one or more chambers 223 among the plurality of chambers 223 may be disposed to be connected to a part in which a weld bead W is formed. In the present embodiment, the uppermost chamber 223 of the three chambers 223 is disposed to be connected to the weld bead (W) formation part. In this case, the uppermost chamber 223 may accommodate by-products such as spatter, fumes, and the like, generated during welding, and function to prevent the by-products from flowing into the case 210.

Meanwhile, the support surface 222 and the chamber 223 as described above may be disposed to correspond to a portion of an upper end 212b of the case 210. That is, the support surface 222 and the chamber 223 may be disposed in the portion of the upper end 212b in which the insulating coating layer 212a is omitted and may be in contact with or spaced apart from the inner surface 212 of the case 210. Accordingly, the support surface 222 and the chamber 223 can function as a structure to secure the interval between the weld bead W and the insulating coating layer 212a and limit welding heat transfer.

Meanwhile, in the present embodiment, the support surface 222 and the chamber 223 as described above may be formed by the first and second extended ribs 224 and 225. The first extension rib 224 may be formed to extend upwardly from an edge portion of the cap plate 220, and the second extension rib 225 may be formed to extend laterally from an upper end of the first extension rib 224 toward the outer surface 213 of the case 210. In the present embodiment, the bonding area 221 is coupled to the case 210 by welding an end of the second extension rib 225 to the upper end of the case 210.

The first extension rib 224 may be formed to extend by a predetermined length vertically, to correspond to the portion of the upper end 212b in which the insulating coating layer 212a is omitted. In addition, the first extension rib 224 may be spaced apart from the inner surface 212 of the case 210 to have a predetermined interval. The interval between the first extension rib 224 and the inner surface 212 may function as the above-described chamber 223.

In the present embodiment, the first extension rib 224 may be provided with a plurality of support ribs 226. The support ribs 226 may be formed to extend in a lateral direction from the first extension rib 224 toward the inner surface 212 of the case 210. An end of the support rib 226 may be in contact with and supported by the inner surface 212 of the case 210 to form the support surface 222. In addition, a plurality of support ribs 226 may be provided, and the plurality of support ribs 226 may be disposed to be spaced apart from each other by a predetermined interval vertically along the first extension rib 224 extending vertically. A space in which the support ribs 226 are spaced apart may function as the above-described chamber 223. In the present embodiment, the three support ribs 226 are disposed to be spaced apart from each other vertically, and three chambers 223 are formed between the second extension rib 225 and the three support ribs 226.

Although not shown, in some other embodiments, a portion or all of the plurality of support ribs 226 as described above may have different sizes, shapes, dispositions, and the like. For example, the plurality of support ribs 226 may be formed to have different thicknesses or intervals so that a volume of each chamber 223 is formed differently. More specifically, the plurality of support ribs 226 may be arranged so that the interval therebetween becomes gradually smaller or larger toward a lower side. Alternatively, the plurality of support ribs 226 may be formed so that the thickness thereof gradually decreases or increases toward the lower side. As another example, the plurality of support ribs 226 may be formed to have different lengths in a lateral direction. More specifically, the plurality of support ribs 226 may be formed so that the length in the lateral direction gradually becomes smaller or larger toward the lower side. In this case, at least a portion of the support surfaces 222 of each support rib 226 may contact the inner surface 212 of the case 210 with different pressing forces, and in some cases, a portion of the support surfaces 222 may be disposed to be spaced apart from the inner surface 212 by a predetermined amount.

FIG. 2C is a diagram illustrating an operating state of the cap plate and case shown in FIG. 2A. For example, (a) of FIG. 2C is a diagram for illustrating a coupling process of a cap plate 220 and a case 210. (b) of FIG. 2C is a diagram for illustrating a relationship between the cap plate 220 and the case 210 in a swelling state.

Referring to (a) of FIG. 2C, the cap plate 220 may be fastened to an upper end of the case 210 to close the opening 211 at the upper end of the case 210 after disposition of the electrode assembly 120, or the like. In the present embodiment, the cap plate 220 may be inserted into and fastened to the opening 211 at the upper end of the case 210 while the bonding area 221 formed on the edge portion slides in contact with the inner surface 212 of the case 210. In addition, a vertical position of the cap plate 220 may be regulated by the second extension rib 225 being in contact with and supported by the upper end of the case 210.

The cap plate 220 may be inserted into the opening 211 as described above and then welded to the case 210. Specifically, in the present embodiment, the cap plate 220 may be bonded to the second extension rib 225 while the upper end of the case 210 forms a weld bead W. Here, the chamber 223 disposed at the top may be connected to the bonding line and can function to accommodate by-products such as spatter, fumes, and the like, generated during welding. Accordingly, an inflow of welding by-products into the case 210 can be appropriately restricted.

Meanwhile, in the present embodiment, the bonding line in which the weld bead W is formed may be spaced by a predetermined interval upwardly from the insulating coating layer 212a by the first extension rib 224 extending vertically. In addition, a plurality of chambers 223 are disposed vertically between the bonding line and the insulating coating layer 212a, and the plurality of chambers 223 are partitioned from each other by support ribs 226. The plurality of chambers 223 and support ribs 226 may function to limit welding heat generated in the bonding line from being transferred to the insulating coating layer 212a. As illustrated, the structure in which the plurality of chambers 223 and the support ribs 226 are alternately and repeatedly disposed can contribute to more effectively limiting the welding heat transfer as described above. Accordingly, damage to the insulating coating layer 212a during welding and bonding can be significantly reduced.

Referring to (b) of FIG. 2C, the bonding area 221 as described above may also contribute to maintaining the sealing force of the cap plate 220 during swelling. That is, the plurality of support ribs 226 and support surfaces 222 disposed vertically to be spaced apart with the chamber 223 interposed therebetween may form a kind of multilayer sealing structure in an area adjacent to the weld bead W, and this multilayer sealing structure may function as a means of maintaining a sealed state in response to deformation of the case 210. For example, even if a portion of the support ribs 226 or the support surfaces 222 are spaced apart from the inner surface 212 depending on the deformed form of the case 210, another portion of the support ribs 226 or the support surfaces 222 may be in contact with the inner surface 212 and maintained in a sealed state.

In addition, the chamber 223 may function as a kind of buffer space in which heat, pressure, and by-products inside the case 210 are temporarily accommodated. When a plurality of chambers 223 are provided as in the present embodiment, the buffer space function as described above may be implemented more effectively.

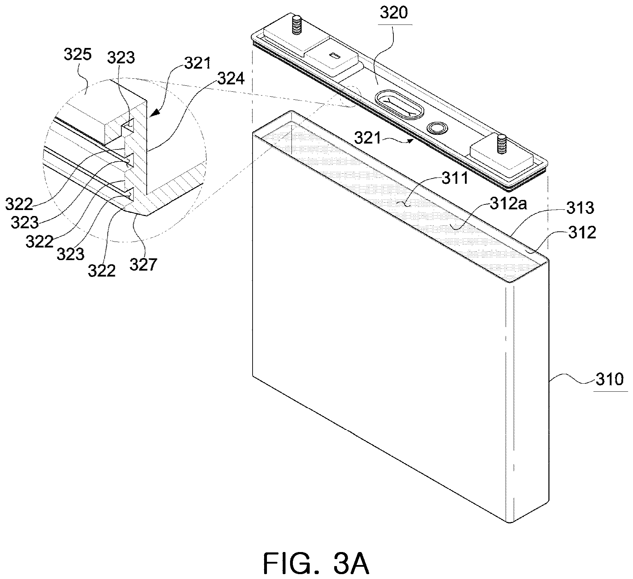

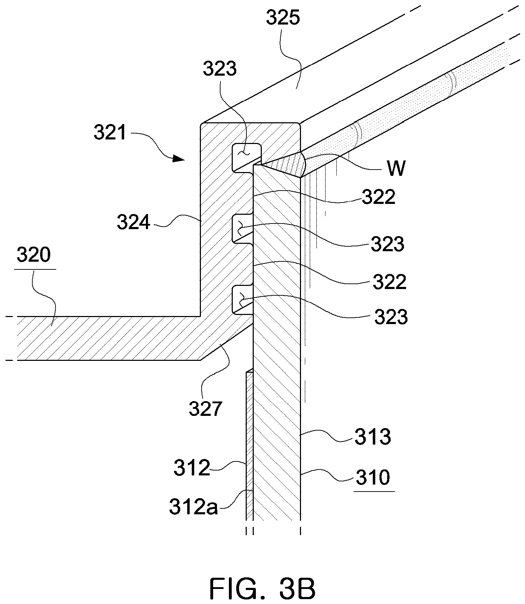

FIG. 3A is a schematic perspective view of a cap plate and a case according to another embodiment. FIG. 3B is a schematic partial cross-sectional view of the cap plate and case shown in FIG. 3A. At least a portion of the description of the case 210 and cap plate 220 of FIGS. 2A, 2B, and/or 2C may be applied to a case 310 and a cap plate 320 of FIGS. 3A and/or 3B.

For convenience, the following embodiments will be described focusing on differences from the above-described embodiment.

Referring to FIGS. 3A and 3B, the case 310 of the present embodiment may have an opening 311 formed at an upper end thereof, and may have an inner surface 312 and an outer surface 313. In addition, an insulating coating layer 312a may be formed on the inner surface 312 of the case 310. This is generally similar to those in the above-described embodiments.

Meanwhile, the cap plate 320 of the present embodiment may be fastened to an upper end of the case 310 to close an opening 311. The cap plate 320 may include a bonding area 321 welded to the case 310, and the bonding area 321 may extend along an edge portion of the cap plate 320.

The bonding area 321 may include first and second extension ribs 324 and 325, and the first extension rib 324 may formed to extend upwardly from the edge portion of the cap plate 320. The second extension rib 325 may formed to extend laterally from an upper end of the first extension rib 324 toward the outer surface 313 of the case 310.

The bonding area 321 may include a plurality of chambers 323, and in the present embodiment, three chambers 323 disposed vertically and spaced apart are illustrated. In the present embodiment, a concave groove may be formed on an outer surface of the first extension rib 324 facing the inner surface 312 of the case 310, and this groove may form the chamber 323. That is, the chamber 323 of the present embodiment may have a shape of a groove formed by the outer surface of the first extension rib 324, formed to be concave by a predetermined amount.

In addition, in the present embodiment, the uppermost chamber 323 may be disposed to correspond to an upper edge portion of the case 310. That is, the uppermost chamber 323 may extend to a position, which is somewhat higher than the upper end of the case 310, and the upper edge portion of the case 310 may be exposed into the chamber 323. In other words, the uppermost chamber 323 may be disposed at a height including a bonding line in which the weld bead (W) is formed therein. In this case, by-products generated during welding can be more directly collected in the uppermost chamber 323.

Meanwhile, the bonding area 321 may include a plurality of support surfaces 322. In the present embodiment, the outer surface of the first extension rib 324 between a pair of groove-shaped chambers 323 may function as the support surface 322. Such support surface 322 and chamber 323 may limit the welding heat transfer, and contribute to maintaining a sealed state when the case 310 is deformed due to swelling or the like. This is generally similar to those in the above-described embodiment.

If necessary, the cap plate 320 of the present embodiment may include a chamfer 327 on a lower edge portion corresponding to the bonding area 321. The chamfer 327 may extend downwardly toward the inside of the case 310, to guide the disposition for coupling between the cap plate 320 and the case 310.

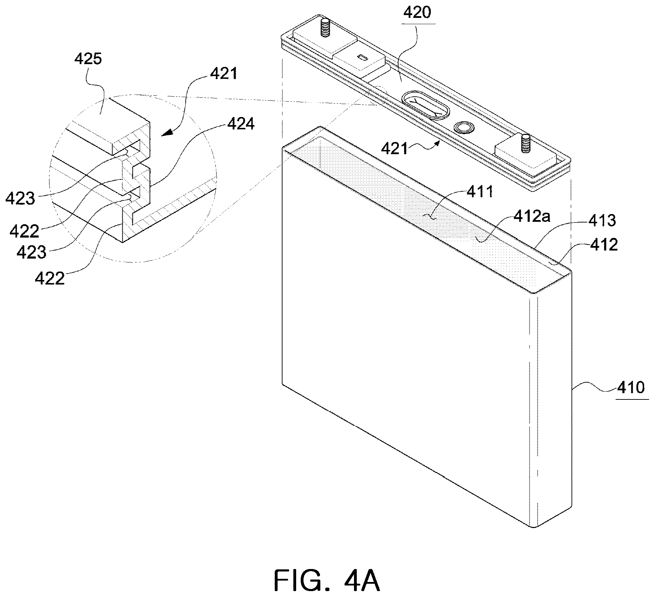

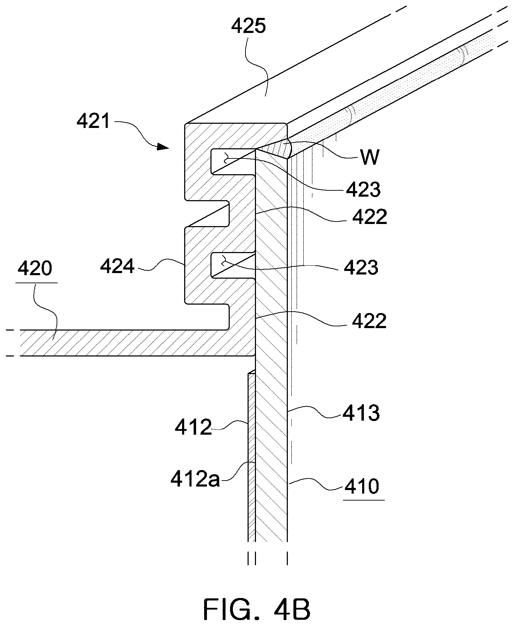

FIG. 4A is a schematic perspective view of a cap plate and a case according to another embodiment. FIG. 4B is a schematic partial cross-sectional view of the cap plate and case shown in FIG. 4A.

Referring to FIGS. 4A to 4B, the case 410 of the present embodiment may include an opening 411, an inner surface 412, and an outer surface 413, and an insulating coating layer 412a may be formed on the inner surface 412. This is generally similar to those in the above-described embodiments.

The cap plate 420 of the present embodiment may be fastened to an upper end of the case 410 to close an opening 411. The cap plate 420 may include a bonding area 421 welded to the case 410, and the bonding area 421 may extend along an edge portion of the cap plate 420.

In addition, the bonding area 421 may include first and second extension ribs 424 and 425. In the present embodiment, the first extension rib 324 may formed to extend upwardly from the edge portion of the cap plate 420 to have a predetermined curve. The second extension rib 425 may extend laterally from an upper end of the first extension rib 424 to be welded to the upper end of the case 410.

The bonding area 421 may include a plurality of chambers 423 and a support surface 422. In the present embodiment, two chambers 423 and two support surfaces 422 are illustrated, respectively. One or more chambers 423 among the plurality of chambers 423 may be disposed to be connected to a bonding line in which a weld bead (W) is formed, and in the present embodiment, the uppermost chamber 423 is disposed to be connected to the bonding line.

Meanwhile, in the present embodiment, the plurality of chambers 423 and the support surfaces 422 may be formed through a curve of the first extension rib 424. The first extension rib 424 may be formed to form repetitive curves in and out and extend upwardly in an area adjacent to the inner surface 412 of the case 410, and a portion of the first extension rib 424 in contact with and supported by the inner surface 412 may function as a support surface 422. In addition, the separation space between the first extension rib 424 and the inner surface 412 may function as the above-described chamber 423. In the present embodiment, the chamber 423 and the support surface 422 are alternately and repeatedly disposed according to the curve of the first extension rib 424.

The plurality of chambers 423 and support surfaces 422 as described above may function similarly to the corresponding configurations of the above-described embodiments. That is, the uppermost chamber 423 may accommodate by-products such as spatter, fumes, and the like generated during welding and prevent the by-products from flowing into the case 410, and a plurality of chambers 423 and support surfaces 422, alternately and repeatedly disposed, may function to limit welding heat transfer to the insulating coating layer 412a.

In addition, the plurality of support surfaces 422 may contribute to effectively maintaining the inner surface 412 in a sealed state when the case 410 is deformed due to swelling, or the like. In the present embodiment, the plurality of support surfaces 422 may be formed by a curve of the first extension rib 424, and this curved shape may allow a certain amount of elastic deformation to each of the support surfaces 422 to improve sealing force.

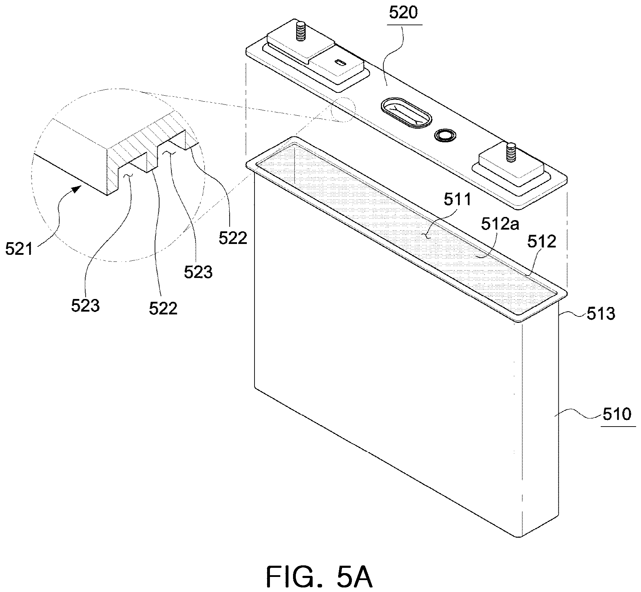

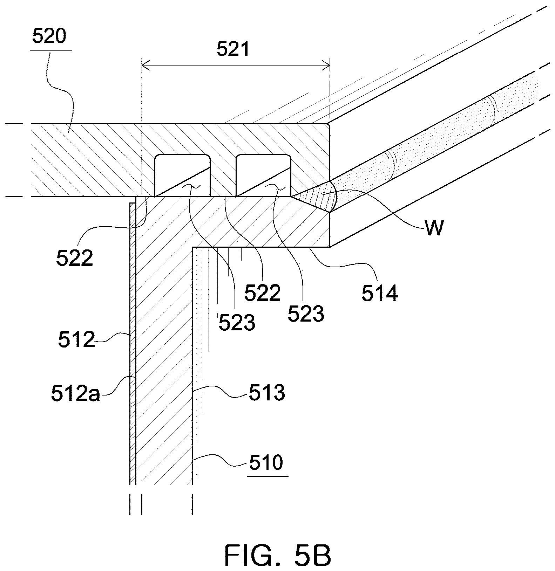

FIG. 5A is a schematic perspective view of a cap plate and a case according to another embodiment. FIG. 5B is a schematic partial cross-sectional view of the cap plate and case shown in FIG. 5A.

Referring to FIGS. 5A and 5B, the present embodiment has some differences from the above-described embodiments in that a bonding area 521 extends in a lateral direction to correspond to a main surface of the cap plate 520. In addition, in the present embodiment, an upper end of a case 510 may be bent in the lateral direction to correspond to the bonding area 521 and formed to extend by a predetermined amount.

Specifically, the case 510 of the present embodiment may include an opening 511, an inner surface 512, and an outer surface 513, and an insulating coating layer 512a may be formed on the inner surface 512. In the present embodiment, the insulating coating layer 512a may be formed in a predetermined area including an upper area of the inner surface 512. That is, in the present embodiment, a welding position may be spaced apart in a lateral direction from the insulating layer 512a by a predetermined interval by a flange 514, to be described later, and thus, unlike the above-described embodiments, the insulating coating layer 512a may not be omitted from the upper area of the inner surface 512.

Meanwhile, the case 510 of the present embodiment may include a flange 514 at an upper end. The flange 514 may be formed to extend in a lateral direction by a predetermined length from the upper end of the case 510. In the present embodiment, the flange 514 is formed to extend from an upper end of the case 510 to the outside of the case 510 in consideration of insertion of the electrode assembly 120. The flange 514 may be disposed to correspond to the bonding area 521 of the cap plate 520 and welded to the bonding area 521.

Meanwhile, the cap plate 520 may be fastened to the upper end of the case 510 to close the opening 511. The cap plate 520 may include a bonding area 521 for bonding to the case 510, and the bonding area 521 may extend along an edge portion of the cap plate 520.

In the present embodiment, the bonding area 521 may extend in a lateral direction to correspond to a main surface of the cap plate 520. In other words, in the present embodiment, the bonding area 521 generally forms a plane corresponding to the cap plate 520 and may extend in the lateral direction. Alternatively, in the present embodiment, the joint area 521 may be defined as a partial area of the edge of the cap plate 520 coupled to the flange 514.

The bonding area 521 may include one or more chambers 523. In the present embodiment, the chamber 523 is formed by a concave groove formed to be concave on a bottom surface of the bonding area 521 and an upper surface of the flange 514.

In some embodiments, a plurality of chambers 523 may be provided in plural, and the plurality of chambers 523 may be disposed to be spaced apart from each other by a predetermined interval in the bonding area 521. In the present embodiment, two chambers 523 are disposed to be spaced apart in a lateral direction with a support surface 522 interposed therebetween. In addition, in this case, one or more chambers 523 among the plurality of chambers 523 may be disposed to be connected to a bonding line to which the flange 514 and the cap plate 520 are bonded. That is, one or more chambers 523 among the plurality of chambers 523 may be disposed to be connected to a part in which a weld bead (W) is formed. In the present embodiment, the chamber 523 disposed on the outermost side (right side in the drawing) of the two chambers 523 is disposed to be connected to the weld bead (W) formation part. In this case, the outermost chamber 523 may have functions and effects similar to those of the above-described embodiments.

Meanwhile, the bonding area 521 may include one or more support surfaces 522 be in contact with and supported by the flange 514. When a plurality of chambers 523 are provided as in the present embodiment, the support surfaces 522 may be comprised of a plurality of support surfaces, and the chambers 523 and the support surfaces 522 may be alternately and repeatedly disposed in the lateral direction.

As described above, the secondary battery according to embodiments of the present disclosure may include a cap plate including a bonding area and welded and bonded to the case. In addition, the bonding area may include a support surface in contact with and supported by the case, and a chamber formed between the bonding area and the inner surface of the case. In some embodiments, the plurality of support surfaces and chambers described above may be provided, and the plurality of support surfaces and chambers may be alternately and repeatedly disposed within the bonding area.

The bonding area as described above may accommodate by-products generated during welding and limit a transfer of welding heat to an insulating coating layer inside the case. Accordingly, an inflow of welding by-products or damage to the insulating coating layer may be prevented during the manufacturing process. In addition, the bonding area as described above can effectively respond to deformation of the case due to swelling, or the like. In other words, the bonding area as described above may maintain a sealed state even when the case is deformed through a plurality of support surfaces. In addition, each chamber may function as a buffer space in which internal heat, pressure, by-products, and the like are temporarily accommodated to assist in maintaining the above-described airtight state.

As set forth above, according to embodiments of the present disclosure, a secondary battery may include a cap plate including a bonding area and welded and bonded to a case. In addition, the bonding area may include a support surface in contact with the case and supported by the case a chamber formed between the bonding area and the inner surface of the case.

In some embodiments, the plurality of support surfaces and chambers described above may be provided, respectively, and the plurality of support surfaces and chambers may be alternately and repeatedly disposed within the bonding area.

Only specific examples of implementations of certain embodiments are described. Variations, improvements and enhancements of the disclosed embodiments and other embodiments may be made based on the disclosure of this patent document.

While exemplary embodiments have been illustrated and described above, it will be apparent to those skilled in the art that modifications and variations could be made without departing from the scope of the present invention as defined by the appended claims.

## Claims

1. A secondary battery, comprising:
an electrode assembly;
a case including an opening for insertion of the electrode assembly; and
a cap plate including a bonding area welded to the case, and closing the opening,
wherein the bonding area comprises one or more support surfaces in contact with and supported by the case; and
one or more chambers formed with a portion of the bonding area spaced apart from the case by the support surface.

2. The secondary battery of claim 1, wherein the chamber is disposed to be connected to a weld bead formation part for bonding to the case, and is formed to accommodate by-products generated during welding.

3. The secondary battery of claims 1 or 2, wherein the chamber comprises a plurality of chambers, wherein the plurality of chambers are disposed to be spaced apart from each other with the support surface interposed therebetween, and at least one chamber, among the plurality of chambers is disposed to be connected to the weld bead formation part for bonding to the case.

4. The secondary battery of any one of preceding claims, wherein the case comprises an insulating coating layer on an inner surface of the case,
the cap plate comprises a weld bead bonded to the case, and
the support surface and the chamber are disposed between the weld bead and the insulating coating layer.

5. The secondary battery of any one of preceding claims, wherein the support surface comprises a plurality of support surfaces, and the chamber comprises a plurality of chambers, and
the plurality of support surfaces and the plurality of chambers are alternately and repeatedly disposed along the bonding area.

6. The secondary battery of any one of preceding claims, wherein the support surface comprises a plurality of support surfaces, wherein the plurality of support surfaces function to maintain at least one support surface, among the plurality of support surfaces in contact with the inner surface of the case when the case is deformed.

7. The secondary battery of any one of preceding claims, wherein the bonding area comprises
a first extension rib formed to extend upwardly from an edge portion of the cap plate, wherein at least a portion of the first extension rib is disposed to be spaced apart from the inner surface of the case by the support surface; and
a second extension rib formed to extend laterally from the first extension rib to form a weld bead for bonding to the case.

8. The secondary battery of claim 7, wherein the first extension rib comprises one or more support ribs formed to extend toward the inner surface of the case, wherein an end of the first extension rib is in contact with and supported by the inner surface of the case to form the support surface.

9. The secondary battery of claim 8, wherein the support rib comprises a plurality of support ribs, wherein the plurality of support ribs are disposed to be spaced apart by a predetermined interval along the first extension rib, to form the chamber between a pair of adjacent support ribs.

10. The secondary battery of claim 7, wherein the cap plate comprises a chamfer formed on a lower edge portion corresponding to the bonding are, to guide the bonding to the case.

11. The secondary battery of any one of preceding claims, wherein the bonding area comprises
a first extension rib formed to extend upwardly from an edge portion of the cap plate,
wherein the first extension rib extends toward the inner surface of the case, forming repetitive curves inwardly and outwardly thereof, and according to the curves, a portion of the first extension rib is in contact with the inner surface of the case to form the support surface, and another portion of the first extension rib is spaced apart from the inner surface of the case to form the chamber.

12. The secondary battery of any one of preceding claims, wherein the case comprises a flange extending in a lateral direction from an upper end of the case toward the outside of the case, and bonded to the cap plate, and
the bonding area forms a plane corresponding to the cap plate and is formed to extend in the lateral direction.

13. The secondary battery of claim 12, wherein the chamber is formed in a form of a groove formed to be concave on a bottom surface of the bonding area, wherein the plurality of grooves are disposed to be spaced apart in the lateral direction along the bonding area, and at least one chamber, among the plurality of chambers, are disposed to be connected to a weld bead formation part for bonding to the case.

14. The secondary battery of claim 12, wherein the support surface and the chamber are disposed between an insulating coating layer formed on the inner surface of the case and a weld bead for bonding the cap plate and the case, and are formed to limit welding heat transfer to the insulating coating layer.
